# EUROPEAN PATENT SPECIFICATION

(11) **EP 2 818 842 B1**
(45) Date of publication and mention of the grant of the patent: **08.11.2017**
(21) Application number: 13425090.1
(22) Date of filing: 26.06.2013
(51) Int. Cl.: G01M 3/24

(54) **METHOD AND SYSTEM OF ACOUSTIC MONITORING FOR THE DETECTION OF LEAKS IN UNDERWATER STRUCTURES CONTAINING A FLUID UNDER PRESSURE**
AKUSTISCHES ÜBERWACHUNGSVERFAHREN UND SYSTEM ZUR DETEKTION VON UNDICHTIGKEITEN IN UNTERWASSERSTRUKTUREN MIT FLUSSIGKEITEN UNTER DRUCK
METHODE ET SYSTEME ACOUSTIQUE DE SURVEILLANCE POUR LA DETECTION DE FUITES DANS DES STRUCTURES SOUS-AQUATIQUES QUI CONTIENNENT UN FLUIDE SOUS PRESSION

(43) Date of publication of application: 31.12.2014
(73) Proprietor: CO.L.MAR. S.R.L., 19136 La Spezia (SP) (IT)
(72) Inventor: Barbagelata, Alessandro, 19030 Romito di Arcola (SP) (IT); Barbagelata, Luigi, 19030 Romito di Arcola (SP) (IT); Barbagelata, Pietro, 19032 Pugliola di Lerici (SP) (IT); Vettori, Giancarlo, 19121 La Spezia (SP (IT)
(74) Representative: Biallo, Dario

(56) References cited:
- WO-A1-02/25239
- WO-A1-2013/019119

## Description

The present invention refers to a method and to a system of acoustic monitoring for the detection of leaks in underwater structures containing a fluid under pressure, particularly but not exclusively useful for monitoring submarine gas or oil pipelines.

Indeed, in such ducts, some of the transported fluid can be lost due to leaks or damaged or, in any case, defective joints of the piping.

These leaks involve the transition of the fluid from the pressure inside the ducts to the lower pressure outside; such a transition generates an acoustic signal the intensity of which depends upon the turbulence and upon the immediate expansion of the mass of fluid that has come out.

The detection of this acoustic signal can, therefore, be used to promptly signal the presence of a leak so as to prevent environmental disasters and to minimise maintenance costs.

For this purpose monitoring systems are currently known that are suitable for being towed by a ship and for carrying out the monitoring operations during towing. These systems, in detail, comprise a plurality of acoustic sensors that are suitable for detecting the aforementioned acoustic signal and for sending a corresponding signal to a central control and processing unit, generally on the ship located at the surface, through which an operator can be informed of the presence of a leak so as to begin the maintenance procedures without wasting time. Known mobile systems, during towing, detect the surrounding acoustic signal, the intensity of which is around a certain value; when the sensors, for example, pass near to a leak, the intensity of the detected signal increases exceeding a predetermined threshold. At this stage the central processing and control unit generates a warning signal for the operator.

These mobile systems, however, by their nature detect the variation of the signal received due to the movement of the ship from which they are towed and, therefore, the reliability of their detections is strictly related to the speed at which such a ship is moving and, consequently, also to the time taken by the ship to pass through the interested area. The document WO 02/25239 A discloses a method and a system for the acoustic monitoring of leaks in an underwater structure. The purpose of the present invention is that of avoiding the aforementioned drawbacks and, in particular, that of devising a method and a system of acoustic monitoring that is capable of statically detecting the presence or not of leaks in underwater structures containing a fluid under pressure.

Another purpose of the present invention is that of making a method and a system of acoustic monitoring that is capable of providing accurate and reliable detections of the possible presence of leaks in underwater structures.

A further purpose of the present invention is that of making a method and a system of acoustic monitoring that is capable of providing an indication of the position of leaks in underwater structures.

These and other purposes according to the present invention are achieved by making a method and a system of acoustic monitoring as outlined in claims 1 and 9. Further characteristics of the method and of the system of acoustic monitoring are object of the dependent claims.

The characteristics and the advantages of a method and of a system of acoustic monitoring according to the present invention shall become clearer from the following description, given as an example and not for limiting purposes, with reference to the attached schematic drawings, in which:
- figure 1 is a schematic view of a system of acoustic monitoring according to the present invention;
- figures 2a and 2b are two schematic perspective views of an acoustic sensor included in the system of figure 1;
- figure 3 is a schematic view of a plurality of acoustic sensors of figures 2a and 2b arranged according to a particular work configuration.

With reference to the figures, these show a system of acoustic monitoring for the detection of leaks in an underwater structure containing a fluid under pressure, wholly indicated with reference numeral 10.

The underwater structure, in particular, can be a duct, like, for example, a gas or an oil pipeline.

Fluid losses, therefore, can be due to leaks in the ducts or to faulty joints between the piping that are not completely watertight.

The monitoring system 10 according to the present invention is of the static type, or rather it is suitable for being stably installed near to a portion of the underwater structure to be monitored.

The monitoring system 10 comprises at least one acoustic sensor 11 that is configured for acquiring an acoustic signal in an area surrounding the underwater structure.

In detail, such at least one acoustic sensor 11 is arranged in an underwater position near to portions of the underwater structure to be monitored, like, for example, piping, flanges, risers or manifolds.

According to the present invention such a monitoring system 10 comprises at least one first processing unit 12 that is associated with the at least one acoustic sensor 11 and that is configured to carry out a pre-processing of the acoustic signal so as to obtain an acoustic synthesis signal, and a second processing unit 13 that is connected to the first processing unit 12 by means of connection means 14. According to the present invention, the first processing unit 12 is arranged underwater, whereas the second processing unit 13 is at the surface in a floating position.

The first processing unit 12 is thus moreover configured for transmitting the acoustic synthesis signal to the second processing unit 13, through the connection means 14.

Such a second processing unit 13 is advantageously configured to numerically process the acoustic synthesis signal received so as to allow the detection of the acoustic signal generated following the presence of a leak of fluid in the monitored underwater structure. In particular, the second processing unit 13 is capable of treating the acoustic synthesis signal in a way such as to increase the signal/noise ratio (signal generated by the leak/ambient noise) so as to be able to define a threshold ratio above which the presence of a leak can be considered substantially sure.

Preferably the second processing unit 13 can be integrated into a personal computer so that the results of the processing can be visualized by a generic operator.

The connection means 14 are suitable for ensuring the exchange of information signals between the first 12 and the second 13 processing unit and possibly for transmitting electrical power supply signals, of around 12-24 Volt in direct current, for the acoustic sensors 11 and the first processing unit 12.

In particular, the parameters that control the acquisition and the pre-processing of data are sent towards the first processing unit 12, whereas the results of the pre-processing of the signals acquired and, moreover, some status update signals that describe the current configuration of parameters used for pre-processing, are sent towards the second processing unit 13.

Preferably, the connection means 14 can be an underwater power cable with transmission RS485, or a copper ETHERNET cable, or an optical fibre ETHERNET cable.

The connection between first and second processing unit can also occur by means of a pre-existing SCADA type communication and control system, having one port available on the surface and one near to the point of installation of the first processing unit 12.

In the case in which it is necessary to monitor a larger area than that covered by a single acoustic sensor 11 or when the structure to be monitored has such a shape as to require it, the monitoring system 10 can comprise a plurality of first processing units 12 that are associated with a corresponding plurality of acoustic sensors 11; in such a case, the connection means 14 are suitable for connecting such a plurality of first processing units 12 to a single second processing unit 13.

Advantageously, the second processing unit 13 is configured so as to process the acoustic synthesis signal so as to determine at least one parameter that is variable over time representative of the intensity of the spectral components of such an acoustic synthesis signal. In such a case, after having determined such a parameter representative of the intensity, the second processing unit 13 is configured to compare the value of such a parameter with the value of a corresponding threshold parameter that is variable over the predetermined time. Following such a comparison, the second processing unit 13 generates an alarm signal when the value of the at least one parameter representative of the intensity exceeds the value of the aforementioned corresponding threshold parameter.

This alarm signal indicates the presence of a leak. Preferably, the at least one acoustic sensor 11 and the associated first processing unit 12 are enclosed in a watertight container 15 that is suitable for being stably positioned on the seabed or on an underwater rock formation.

In a first embodiment of the present invention, such at least one acoustic sensor comprises an omni-directional hydrophone.

In such a case, the first processing unit 12 is configured for amplifying the acoustic signal acquired by the sensor that is associated to it, filtering the amplified signal in a first predetermined frequency band, translating the amplified and filtered signal into a second predetermined frequency band and determining the acoustic synthesis signal by calculating the logarithm of the power spectrum of the signal translated in frequency and then calculating its weighted average value in a certain number of frequency bands.

Preferably, the amplified and filtered signal is cut in amplitude so as to eliminate spurious spikes before the translation in frequency.

Preferably, the second predetermined frequency band is the range of frequencies from 0 to 40 KHz.

In the first embodiment of the present invention, the second processing unit 13 is configured so as to carry out a discrete cosine transform of the acoustic synthesis signal and to determine the at least one parameter representative of the intensity based upon the transformed signal.

In an alternative embodiment, the at least one acoustic sensor 11 is made by means of a direction finder comprising a plurality of omni-directional hydrophones arranged according to a predetermined configuration.

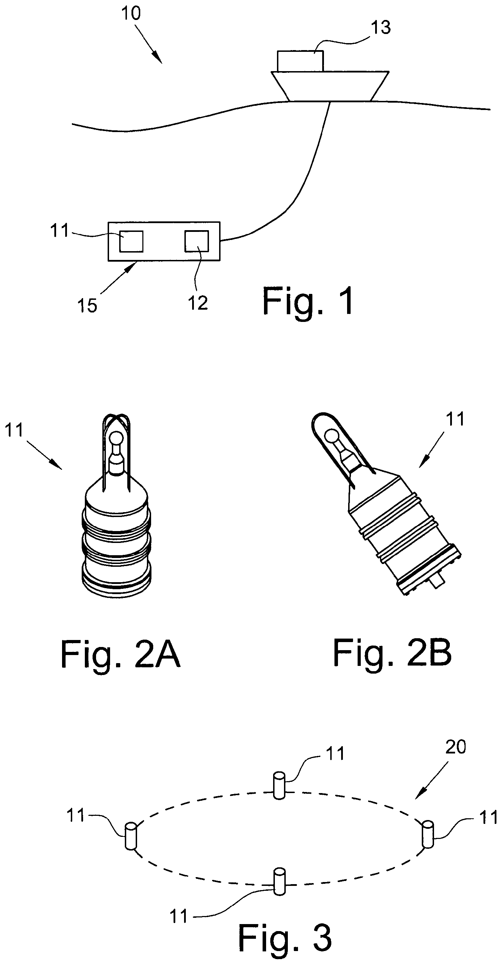

In particular, there can be four of such hydrophones and they can be arranged, as illustrated for example in figure 3, according to a circular scheme. In such a way the acoustic signals detected by the four hydrophones can be combined with one another so as to provide not only information concerning the possible presence of a leakage, but also on the direction from which it comes. In such a way, it is possible to intervene with greater precision to repair the possible leak in the underwater structure.

In such a case, the first processing unit 13 is configured for amplifying the acoustic signals acquired from the direction finder, filtering the amplified signals in the first predetermined frequency band and determining the acoustic synthesis signal by carrying out a spatial filtering of the amplified and filtered signals by means of the beamforming technique, considering a predetermined number of filtering directions.

In such a case, the second processing unit 13 is configured for carrying out a static analysis of the signal filtered spatially by calculating a Kurtosis parameter and determining the at least one parameter representative of the intensity based upon such a Kurtosis parameter. According to the present invention, the threshold parameters can be determined based upon historical data, in particular acoustic signals acquired previously in the same location.

In the case in which there is this historical data, the second processing unit 13 is configured so as to compare the acoustic synthesis signal with the historical data so as to substantially eliminate interferences, before the calculating step of said Kurtosis parameter.

The monitoring method according to the present invention is implemented by the monitoring system 10 and is described in the following part of the description.

Such a method comprises the step consisting of acquiring an acoustic signal in an area surrounding the underwater structure by means of the at least one underwater acoustic sensor 11.

According to the present invention, the monitoring method foresees a pre-processing step of the acquired signal carried out by means of the first underwater processing unit 12, so as to obtain an acoustic synthesis signal. Subsequently, the acoustic synthesis signal is transmitted to the second 13 external processing unit, which in turn carries out a processing of the acoustic synthesis signal so as to determine at least one parameter that is variable over time representative of the intensity of the spectral components of the acoustic synthesis signal.

At this stage, the monitoring method is provided with the step that consists of comparing the value of the at least one parameter representative of the intensity with the value of a corresponding threshold parameter that is variable over the predetermined time, and generating an alarm signal when the value of the at least one parameter representative of the intensity exceeds the value of the corresponding threshold parameter.

In the case in which the acquiring step of the acoustic signal is carried out by means of a single omni-directional acoustic sensor, preferably an omni-directional hydrophone, the pre-processing step comprises the steps consisting of amplifying the acquired acoustic signal, filtering the amplified signal in the first predetermined frequency band and translating the amplified and filtered signal into the second predetermined frequency band.

Subsequently, the pre-processing comprises the step consisting of determining the acoustic synthesis signal by calculating the logarithm of the power spectrum of the signal translated in frequency and then calculating its weighted average value in a certain number of frequency bands, for example 8 frequency bands of 32 values each. This number is a variable number, provide that the product of the number of bands for the values of each of them is 256. This can be selected by the operator of the surface unit and then transmitted to the underwater pre-processing unit.

Preferably, the pre-processing step comprises the step consisting of cutting in amplitude the amplified and filtered acoustic signal so as to eliminate spurious spikes. The latter step is carried out, in particular, before determining the acoustic synthesis signal. Subsequently to the pre-processing step described above, the processing step comprises the steps consisting of carrying out a discrete cosine transform of the acoustic synthesis signal and determining the at least one parameter representative of the intensity based upon the transformed signal.

Such a processing step, therefore, makes it possible to study the evolution over time of the transformed signal by calculating the average amplitude values of such signals and by comparing such average values with threshold values acquired previously in a "learning" step that are part of the historical data mentioned above.

In the case in which the acquiring step is carried out by the direction finder comprising a plurality of acoustic sensors, the pre-processing step comprises the steps consisting of amplifying each acquired acoustic signal, filtering the amplified signals in the first predetermined frequency band and determining the acoustic synthesis signal by carrying out a spatial filtering of the amplified and filtered signals by means of the beamforming technique, considering a predetermined number of filtering directions. Preferably, there are one hundred and twenty filtering directions and each one is spaced apart from the following one by three degrees.

After such pre-processing, the processing step comprises the step of statistical analysis of the spatially filtered signal that consists of calculating a Kurtosis parameter, as a function of the considered filtering direction, and determining the at least one parameter representative of the intensity based upon such a Kurtosis parameter.

In the case in which the threshold parameters are determined on the basis of the historical data, the processing step, before the calculating step of the Kurtosis parameter, comprises the step consisting of comparing the acoustic synthesis signal with the aforementioned historical data so as to substantially eliminate interferences.

From the description carried out, the characteristics of the system and of the monitoring method object of the present invention should be clear, just as the relative advantages should also be clear.

Indeed, the method according to the present invention carries out a first processing directly in the processing unit associated with the acoustic sensor, which, of course, being underwater, is difficult to access and to control.

Such a pre-processing step minimises the amount of data to be transmitted on the connection means and is based, in both cases, upon the repeated use of the Fast Fourier Transform for the passage from the time domain to the frequency domain and *vice versa* so as to obtain the most effective synthesis of the signals to be transmitted. In both cases the information is transmitted as a function of a time parameter related to the intensity of the acoustic signal.

In the first case the parameter is related to the intensity as a function of the frequency, in the second it is related to the intensity as a function of the direction from which the signal generated by the leakage arrives.

This makes it possible to use connection means with low transmission speed, for example 9600 baud per channel, even when it is necessary to install a plurality of sensors and a corresponding plurality of underwater processing units.

Finally, it should be clear, that the system and the method thus conceived can undergo numerous modifications and variants, all covered by the invention; moreover, all the details can be replaced by technically equivalent elements. In practice the materials used, as well as the dimensions, can be any according to the technical requirements.

## Claims

1. Method of acoustic monitoring for the detection of leaks in an underwater structure containing a fluid under pressure, said monitoring method comprising the following steps:
- acquiring an acoustic signal in an area surrounding said underwater structure by means of at least one underwater acoustic sensor (11);
- carrying out a pre-processing of said acoustic signal so as to obtain an acoustic synthesis signal by means of at least one underwater processing unit (12);
- transmitting said acoustic synthesis signal to an external processing unit (13) arranged at the surface in a floating position;
- carrying out a processing of said acoustic synthesis signal by means of said external processing unit (13) so as to determine at least one variable parameter over time representative of the intensity of the spectral components of said acoustic synthesis signal;
- comparing the value of said at least one parameter representative of the intensity, with the value of a corresponding threshold parameter that is variable in the predetermined time, said threshold parameters being determined based upon historical data;
- generating an alarm signal when the value of said at least one parameter representative of the intensity exceeds the value of said corresponding threshold parameter, said alarm signal indicating the presence of a leak
wherein said step of acquiring said acoustic signal is carried out by means of an omni-directional acoustic sensor and said pre-processing step comprises the following steps:
- amplifying said acquired acoustic signal and filtering said amplified signal in a first predetermined frequency band;
- translating said amplified and filtered signal in a second predetermined frequency band;
- determining said acoustic synthesis signal by calculating the logarithm of the power spectrum of said signal translated in frequency and then calculating its weighted average value in a certain number of frequency bands.

2. A monitoring method according to claim 1 wherein said pre-processing step moreover comprises the step consisting of cutting said amplified and filtered acoustic signal in amplitude so as to eliminate spurious spikes.

3. A monitoring method according to claim 1 or 2 wherein said processing step comprises the following steps:
- carrying out a discrete cosine transform of said acoustic synthesis signal and determining said at least one parameter representative of the intensity based upon said transformed signal.

4. Method of acoustic monitoring for the detection of leaks in an underwater structure containing a fluid under pressure, said monitoring method comprising the following steps:
- acquiring an acoustic signal in an area surrounding said underwater structure by means of at least one underwater acoustic sensor (11);
- carrying out a pre-processing of said acoustic signal so as to obtain an acoustic synthesis signal by means of at least one underwater processing unit (12);
- transmitting said acoustic synthesis signal to an external processing unit (13) arranged at the surface in a floating position;
- carrying out a processing of said acoustic synthesis signal by means of said external processing unit (13) so as to determine at least one variable parameter over time representative of the intensity of the spectral components of said acoustic synthesis signal;
- comparing the value of said at least one parameter representative of the intensity, with the value of a corresponding threshold parameter that is variable in the predetermined time, said threshold parameters are determined based upon historical data;
- generating an alarm signal when the value of said at least one parameter representative of the intensity exceeds the value of said corresponding threshold parameter, said alarm signal indicating the presence of a leak
wherein said step of acquiring said acoustic signal is carried out by means of a direction finder comprising a plurality of omni-directional acoustic sensors and said pre-processing step comprises the following steps:
- amplifying each acoustic signal acquired by said plurality of sensors and filtering said amplified signals in a first predetermined frequency band;
- determining said acoustic synthesis signal by carrying out a spatial filtering of said signals acquired by said plurality of sensors previously amplified and filtered by means of the beamforming technique, considering a predetermined number of filtering directions.

5. A monitoring method according to claim 4 wherein said processing step comprises the following steps:
- calculating, at each considered filtering direction, a Kurtosis parameter and determining said at least one parameter representative of the intensity based upon said Kurtosis parameter.

6. A monitoring method according to any one of the previous claims wherein said historical data are acoustic signals acquired previously in the same area.

7. A monitoring method according to claim 6 wherein said processing step before the step of calculating said Kurtosis parameter comprises the step consisting of comparing said acoustic synthesis signal with said historical data so as to substantially eliminate interferences.

8. A system of acoustic monitoring (10) for the detection of leaks in an underwater structure containing a fluid under pressure, said system being suitable for being stably installed near to a portion of the underwater structure to be monitored and comprising:
- at least one acoustic sensor (11) suitable for being arranged in an underwater position and configured for acquiring an acoustic signal in an area surrounding said underwater structure;
- at least one first processing unit (12) associated with said at least one acoustic sensor, suitable for being arranged in an underwater position and configured for carrying out a pre-processing of said acoustic signal according to one or more of claims 1-7;
- a second processing unit (13) suitable for being arranged at the surface in a floating position, connected to said first processing unit (12) by means of connection means (14) and configured for carrying out the processing steps according to one or more of claims 1-7.

9. A monitoring system (10) according to claim 8 wherein said at least one acoustic sensor (11) is an omni-directional hydrophone.

10. A monitoring system (10) according to claim 8 wherein said at least one acoustic sensor (11) is a direction finder comprising a plurality of omni-directional hydrophones arranged according to a predetermined configuration.

## Patentansprüche

1. Verfahren des akustischen Überwachens für die Erkennung von Undichtigkeiten in einer Unterwasserstruktur, die eine Flüssigkeit unter Druck enthält, wobei das Überwachungsverfahren die folgenden Schritte aufweist:
- Erfassen eines akustischen Signals in einem Bereich, der die Unterwasserstruktur mittels mindestens eines akustischen Unterwassersensors (11) umgibt;
- Ausführen eines Vorverarbeitens des akustischen Signals, um ein akustisches Synthesesignal mittels mindestens einer Unterwasserverarbeitungseinheit (12) zu erhalten;
- Übertragen des akustischen Synthesesignals an eine an der Oberfläche in einer freischwimmenden Position angeordnete externe Verarbeitungseinheit (13);
- Ausführen eines Verarbeitens des akustischen Synthesesignals mittels der externen Verarbeitungseinheit (13), um mindestens einen variablen Parameter über der Zeit zu ermitteln, der für die Intensität der spektralen Komponenten des akustischen Synthesesignals repräsentativ ist;
- Vergleichen des Werts des mindestens einen für die Intensität repräsentativen Parameters mit dem Wert eines entsprechenden Schwellenwertparameters, der in der vorgegebenen Zeit variabel ist, wobei der Schwellenwertparameter aufgrund von Vergangenheitsdaten ermittelt wird;
- Erzeugen eines Alarmsignals, wenn der Wert des mindestens einen repräsentativen Parameters der Intensität den Wert des entsprechenden Schwellenwertparameters überschreitet, wobei das Alarmsignal die Anwesenheit einer Undichtigkeit anzeigt wobei der Schritt des Erfassens des akustischen Signals mittels eines akustischen Rundumsensors durchgeführt wird und der Vorverarbeitungsschritt die folgenden Schritte aufweist:
- Verstärken des erfassten akustischen Signals und Filtern des verstärkten Signals in einem ersten vorgegebenen Frequenzband;
- Umsetzen des verstärkten und gefilterten Signals in ein zweites vorgegebenes Frequenzband;
- Ermitteln des akustischen Synthesesignals durch Berechnen des Logarithmus des Leistungsspektrums des frequenzumgesetzten Signals und dann Berechnen seines gewichteten Durchschnittswerts in einer bestimmten Anzahl von Frequenzbändern.

2. Überwachungsverfahren nach Anspruch 1, wobei der Vorverarbeitungsschritt darüber hinaus den Schritt bestehend aus Beschneiden des verstärkten und gefilterten akustischen Signals in der Amplitude aufweist, um unerwünschte Spikes zu beseitigen.

3. Überwachungsverfahren nach Anspruch 1 oder 2, wobei der Verarbeitungsschritt die folgenden Schritte aufweist:
- Ausführen einer diskreten Kosinustransformation des akustischen Synthesesignals und Ermitteln des mindestens einen repräsentativen Parameters der Intensität aufgrund des umgewandelten Signals.

4. Verfahren des akustischen Überwachens für die Erkennung von Undichtigkeiten in einer Unterwasserstruktur, die eine Flüssigkeit unter Druck enthält, wobei das Überwachungsverfahren die folgenden Schritte aufweist:
- Erfassen eines akustischen Signals in einem Bereich, der die Unterwasserstruktur mittels mindestens eines akustischen Unterwassersensors (11) umgibt;
- Ausführen eines Vorverarbeitens des akustischen Signals, um ein akustisches Synthesesignal mittels mindestens einer Unterwasserverarbeitungseinheit (12) zu erhalten;
- Übertragen des akustischen Synthesesignals an eine an der Oberfläche in einer freischwimmenden Position angeordnete externe Verarbeitungseinheit (13);
- Ausführen eines Verarbeitens des akustischen Synthesesignals mittels der externen Verarbeitungseinheit (13), um mindestens einen variablen Parameter über der Zeit zu ermitteln, der für die Intensität der spektralen Komponenten des akustischen Synthesesignals repräsentativ ist;
- Vergleichen des Werts des mindestens einen für die Intensität repräsentativen Parameters mit dem Wert eines entsprechenden Schwellenwertparameters, der in der vorgegebenen Zeit variabel ist, wobei die Schwellenwertparameter aufgrund von Vergangenheitsdaten ermittelt werden;
- Erzeugen eines Alarmsignals, wenn der Wert des mindestens einen repräsentativen Parameters der Intensität den Wert des entsprechenden Schwellenwertparameters überschreitet, wobei das Alarmsignal die Anwesenheit einer Undichtigkeit anzeigt wobei der Schritt des Erfassens des akustischen Signals mittels eines Richtungsfinders durchgeführt wird, der eine Vielzahl von akustischen Rundumsensoren aufweist, und der Vorverarbeitungsschritt die folgenden Schritte aufweist:
- Verstärken jedes durch die Vielzahl von Sensoren erfassten akustischen Signals und Filtern der verstärkten Signale in einem ersten vorgegebenen Frequenzband;
- Ermitteln des akustischen Synthesesignals durch Ausführen eines räumlichen Filterns der mittels der Strahlformungstechnik vorher verstärkten und gefilterten, durch die Vielzahl von Sensoren erfassten Signale, wobei eine vorgegebene Anzahl von Filterrichtungen in Betracht gezogen wird.

5. Überwachungsverfahren nach Anspruch 4, wobei der Verarbeitungsschritt die folgenden Schritte aufweist:
- Berechnen eines Kurtosis-Parameters bei jeder betrachteten Filterrichtung und Ermitteln des mindestens einen für die Intensität aufgrund des Kurtosis-Parameters repräsentativen Parameters.

6. Überwachungsverfahren nach einem der vorhergehenden Ansprüche, wobei die Vergangenheitsdaten vorher in demselben Bereich erfasste akustische Signale sind.

7. Überwachungsverfahren nach Anspruch 6, wobei der Verarbeitungsschritt vor dem Schritt des Berechnens des Kurtosis-Parameters den Schritt bestehend aus Vergleichen des akustischen Synthesesignals mit den Vergangenheitsdaten aufweist, um im Wesentlichen Störungen zu beseitigen.

8. System des akustischen Überwachens (10) für die Erkennung von Undichtigkeiten in einer Unterwasserstruktur, die eine Flüssigkeit unter Druck enthält, wobei das System geeignet ist, stabil nahe einem Abschnitt der zu überwachenden Unterwasserstruktur installiert zu werden und aufweist:
- mindestens einen akustischen Sensor (11), der geeignet ist, in einer Unterwasserposition angeordnet und zum Erfassen eines akustischen Signals in einem Bereich konfiguriert zu werden, der die Unterwasserstruktur umgibt;
- mindestens eine erste Verarbeitungseinheit (12), die dem mindestens einen akustischen Sensor zugehörig ist, der geeignet ist, in einer Unterwasserposition angeordnet und zum Ausführen eines Vorverarbeitens des akustischen Signals nach Anspruch 1 bis 7 konfiguriert zu werden;
- eine zweite Verarbeitungseinheit (13), die geeignet ist, um an der Oberfläche in einer freischwimmenden Position angeordnet zu werden, wobei sie mit der ersten Verarbeitungseinheit (12) mittels Verbindungsmitteln (14) verbunden und konfiguriert wird, um die Verarbeitungsschritte nach einem oder mehreren der Ansprüche 1 bis 7 durchzuführen.

9. Überwachungssystem (10) nach Anspruch 8, wobei der mindestens einen akustischer Sensor (11) ein Rundum-Hydrophon ist.

10. Überwachungssystem (10) nach Anspruch 8, wobei der mindestens ein akustischer Sensor (11) ein Richtungsfinder ist, der eine Vielzahl gemäß einer vorgegebenen Konfiguration angeordnete Rundum-Hydrophone aufweist.

## Revendications

1. Procédé de surveillance acoustique pour la détection de fuites dans une structure sous-marine contenant un fluide sous pression, ledit procédé de surveillance comprenant les étapes suivantes :
- l'acquisition d'un signal acoustique dans une zone entourant ladite structure sous-marine au moyen d'au moins un capteur acoustique sous-marin (11) ;
- l'exécution d'un prétraitement dudit signal acoustique de manière à obtenir un signal de synthèse acoustique au moyen d'au moins une unité de traitement sous-marine (12) ;
- la transmission dudit signal de synthèse acoustique à une unité de traitement externe (13) agencée au niveau de la surface dans une position flottante ;
- l'exécution d'un traitement dudit signal de synthèse acoustique au moyen de ladite unité de traitement externe (13) de manière à déterminer au moins un paramètre variable en fonction du temps représentatif de l'intensité des composantes spectrales dudit signal de synthèse acoustique ;
- la comparaison de la valeur dudit au moins un paramètre représentatif de l'intensité avec la valeur d'un paramètre de seuil correspondant qui est variable dans le temps prédéterminé, lesdits paramètres de seuil étant déterminés sur la base de données historiques ;
- la génération d'un signal d'alarme quand la valeur dudit au moins un paramètre représentatif de l'intensité dépasse la valeur dudit paramètre de seuil correspondant, ledit signal d'alarme indiquant la présence d'une fuite
dans lequel ladite étape d'acquisition dudit signal acoustique est exécutée au moyen d'un capteur acoustique omnidirectionnel et ladite étape de prétraitement comprend les étapes suivantes :
- l'amplification dudit signal acoustique acquis et le filtrage dudit signal amplifié dans une première bande de fréquences prédéterminée ;
- la conversion dudit signal amplifié et filtré dans une deuxième bande de fréquences prédéterminée ;
- la détermination dudit signal de synthèse acoustique en calculant le logarithme du spectre de puissance dudit signal converti en fréquence et en calculant ensuite sa valeur moyenne pondérée dans un certain nombre de bandes de fréquences.

2. Procédé de surveillance selon la revendication 1, dans lequel ladite étape de prétraitement par ailleurs comprend l'étape consistant à découper ledit signal acoustique amplifié et filtré en amplitude de manière à éliminer de faux pics.

3. Procédé de surveillance selon la revendication 1 ou 2, dans lequel ladite étape de traitement comprend les étapes suivantes :
- l'exécution d'une transformée en cosinus discrète dudit signal de synthèse acoustique et la détermination dudit au moins un paramètre représentatif de l'intensité sur la base dudit signal transformé.

4. Procédé de surveillance acoustique pour la détection de fuites dans une structure sous-marine contenant un fluide sous pression, ledit procédé de surveillance comprenant les étapes suivantes :
- l'acquisition d'un signal acoustique dans une zone entourant ladite structure sous-marine au moyen d'au moins un capteur acoustique sous-marin (11) ;
- l'exécution d'un prétraitement dudit signal acoustique de manière à obtenir un signal de synthèse acoustique au moyen d'au moins une unité de traitement sous-marine (12) ;
- la transmission dudit signal de synthèse acoustique à une unité de traitement externe (13) agencée au niveau de la surface dans une position flottante ;
- l'exécution d'un traitement dudit signal de synthèse acoustique au moyen de ladite unité de traitement externe (13) de manière à déterminer au moins un paramètre variable en fonction du temps représentatif de l'intensité des composantes spectrales dudit signal de synthèse acoustique ;
- la comparaison de la valeur dudit au moins un paramètre représentatif de l'intensité avec la valeur d'un paramètre de seuil correspondant qui est variable dans le temps prédéterminé, lesdits paramètres de seuil étant déterminés sur la base de données historiques ;
- la génération d'un signal d'alarme quand la valeur dudit au moins un paramètre représentatif de l'intensité dépasse la valeur dudit paramètre de seuil correspondant, ledit signal d'alarme indiquant la présence d'une fuite
dans lequel ladite étape d'acquisition dudit signal acoustique est exécutée au moyen d'un radiogoniomètre comprenant une pluralité de capteurs acoustiques omnidirectionnels et ladite étape de prétraitement comprend les étapes suivantes :
- l'amplification de chaque signal acoustique acquis par ladite pluralité de capteurs et le filtrage desdits signaux amplifiés dans une première bande de fréquences prédéterminée ;
- la détermination dudit signal de synthèse acoustique en exécutant un filtrage spatial desdits signaux acquis par ladite pluralité de capteurs préalablement amplifiés et filtrés au moyen de la technique de formation de faisceau, en considérant un nombre prédéterminé de directions de filtrage.

5. Procédé de surveillance selon la revendication 4, dans lequel ladite étape de traitement comprend les étapes suivantes :
- le calcul, au niveau de chaque direction de filtrage considérée, d'un paramètre de Kurtose et la détermination dudit au moins un paramètre représentatif de l'intensité sur la base dudit paramètre de Kurtose.

6. Procédé de surveillance selon l'une quelconque des revendications précédentes, dans lequel lesdites données historiques sont des signaux acoustiques acquis précédemment dans la même zone.

7. Procédé de surveillance selon la revendication 6, dans lequel ladite étape de traitement avant l'étape de calcul dudit paramètre de Kurtose comprend l'étape consistant à comparer ledit signal de synthèse acoustique avec lesdites données historiques de manière à supprimer sensiblement des interférences.

8. Système de surveillance acoustique (10) pour la détection de fuites dans une structure sous-marine contenant un fluide sous pression, ledit système étant adapté pour être installé de manière stable près d'une portion de la structure sous-marine à surveiller et comprenant :
- au moins un capteur acoustique (11) adapté pour être agencé dans une position sous-marine et configuré pour acquérir un signal acoustique dans une zone entourant ladite structure sous-marine ;
- au moins une première unité de traitement (12) associée audit au moins un capteur acoustique, adaptée pour être agencée dans une position sous-marine et configurée pour exécuter un prétraitement dudit signal acoustique selon une ou plusieurs des revendications 1 à 7 ;
- une deuxième unité de traitement (13) adaptée pour être agencée au niveau de la surface dans une position flottante, connectée à ladite première unité de traitement (12) par le biais de moyens de connexion (14) et configurée pour exécuter les étapes de traitement selon une ou plusieurs des revendications 1 à 7.

9. Système de surveillance (10) selon la revendication 8, dans lequel ledit au moins un capteur acoustique (11) est un hydrophone omnidirectionnel.

10. Système de surveillance (10) selon la revendication 8, dans lequel ledit au moins un capteur acoustique (11) est un radiogoniomètre comprenant une pluralité d'hydrophones omnidirectionnels agencés selon une configuration prédéterminée.
